# EUROPÄISCHE PATENTSCHRIFT

(11) **EP 2 415 162 B1**
(45) Veröffentlichungstag und Bekanntmachung des Hinweises auf die Patenterteilung: **14.08.2013**
(21) Anmeldenummer: 10712698.9
(22) Anmeldetag: 15.03.2010
(51) Int. Cl.: H02P 6/00, H02P 9/30

(54) **VERFAHREN UND VORRICHTUNG ZUR REGELUNG EINER MITTELS EINER ERREGERWICKLUNG FREMDERREGTEN SYNCHRONMASCHINE**
METHOD AND DEVICE FOR CONTROLLING A SYNCHRONOUS MOTOR WHICH IS SEPARATELY EXCITED BY AN EXCITATION WINDING
PROCÉDÉ ET DISPOSITIF DE RÉGULATION D'UNE MACHINE SYNCHRONE À EXCITATION SÉPARÉE PAR ENROULEMENT INDUCTEUR

(30) Priorität: 31.03.2009 DE 102009015106
(43) Veröffentlichungstag der Anmeldung: 08.02.2012
(73) Patentinhaber: SEW-EURODRIVE GmbH & Co. KG, 76646 Bruchsal (DE)
(72) Erfinder: HARTMANN, Matthias, 76646 Bruchsal (DE); LEWANDOWSKI, Marek, 71272 Renningen (DE); HAUCK, Matthias, 68723 Schwetzingen (DE); HAMMEL, Wolfgang, 76646 Bruchsal (DE)
(86) Internationale Anmeldenummer: PCT/EP2010/001613
(87) Internationale Veröffentlichungsnummer: WO 2010/112132

(56) Entgegenhaltungen:
- JP-A- 2006 136 123
- US-B1- 6 967 461

## Beschreibung

Die Erfindung betrifft ein Verfahren und eine Vorrichtung zur Regelung einer mittels einer Erregerwicklung fremderregten Synchronmaschine.

Bei Synchronmaschinen ist bei hohen Drehzahlen die Lage des Rotors bestimmbar, indem die von den Dauermagneten oder bei fremderregten Synchronmaschinen die von den Feldspulen an der Statorwicklung induzierte Spannung bestimmt wird. Bei niedriger Drehzahl ist das induzierte Spannungssignal allerdings sehr schwach und daher schlecht erkennbar.

**Aus der** JP 2006136123 **ist ein Verfahren zur Regelung einer mittels einer Erregerwicklung fremderregten Synchronmaschine bekannt.**

**Aus der** US 6,967,461 B1 **ist eine Nord-Süd-Pol-Bestimmung für eine geberlose Winkellagenbestimmung eines Rotors eines Elektromotors bekannt, wobei ein Trägersignal verwendet wird.**

Der Erfindung liegt daher die Aufgabe zugrunde, die Regelung einer Synchronmaschine zu verbessern.

Erfindungsgemäß wird die Aufgabe bei dem Verfahren nach den in Anspruch 1 und bei der Vorrichtung nach den in Anspruch 10 angegebenen Merkmalen gelöst.

Wichtige Merkmale der Erfindung bei dem Verfahren zur Regelung einer mittels einer Erregerwicklung fremderregten Synchronmaschine sind, dass die Erregerwicklung mit einem unipolaren Strom beaufschlagt wird, dem ein Zusatzsignal überlagert wird. **Dabei ist die , Frequenz des Zusatzsignals ein ganzzahliges Vielfaches von der Frequenz desjenigen Stromanteils, welcher von der Einspeiseeinheit der Primärwicklung zugeführt wird zur Versorgung der Erregerwicklung.**

Von Vorteil ist dabei, dass das Zusatzsignal zumindest einen Wechselspannungsanteil aufweist, so dass auch bei geringer Drehzahl oder sogar Stillstand des Rotors der Maschine eine klar erkennbare, also ein deutlich aus dem Rauschen sich abhebendes Signal der induzierten Spannung einbringbar ist. Denn bei kleinen Drehzahlen oder Stillstand würde von einer nur mit Gleichstrom beaufschlagten Erregerfeldwicklung eine nur geringe induzierte Spannung an der Statorwicklung detektierbar sein. Das Zusatzsignal ist aber mit einer hohen Frequenz ausführbar und somit eine gute Erkennbarkeit gewährleistbar. **Von Vorteil ist dabei, dass die Stromabtastung derart synchronisiert ausführbar ist, dass durch gleitende Mittelwertbildung vom Zusatzsignal verursachte Schwankungen herausfilterbar sind.**

Bei einer vorteilhaften Ausgestaltung weist das Zusatzsignal zumindest einen Wechselspannungsanteil auf, insbesondere dessen Frequenz höher ist, insbesondere mehr als etwa zweimal höher, als die elektrische Frequenz, also Frequenz der induzierten Spannung, bei maximal erlaubte Drehzahl des Rotors der Synchronmaschine. Von Vorteil ist dabei, dass ein sehr gutes Signal-Rauschverhältnis beim Erkennen der Zusatzsignals erreichbar ist.

Bei einer vorteilhaften Ausgestaltung wird die Frequenz des Zusatzsignals mit der Pulsweitenmodulationsfrequenz der Leistungshalbleiter für die Speisung der Statorwicklung synchronisiert. Von Vorteil ist dabei, dass sich das induktiv von der Erregerwicklung auf die Statorwicklung koppelnde Zusatzsignal durch geeignete Wahl der Abtastzeitpunkte von den eigentlichen Regelgrößen separieren lässt. Hierbei ist eine zur Modulationsfrequenz synchrone Abtastung anwendbar.

Bei einer vorteilhaften Ausgestaltung wird das Zusatzsignal berührungslos übertragen an eine elektronische Schaltung, die auf dem Rotor vorgesehen ist und die Erregerwicklung speist. Von Vorteil ist dabei, dass keine zusätzliche Elektronik auf dem Rotor vorzusehen ist, insbesondere also eine geringe Unwucht erreichbar ist und ein geringes Trägheitsmoment, wodurch eine höhere Dynamik bei gleichem Bauvolumen erreichbar ist.

Bei einer alternativen vorteilhaften Ausgestaltung wird das Zusatzsignal von einer elektronischen Schaltung erzeugt, die aus einem Gleichrichter, insbesondere aus einem auf dem Rotor angeordneten Gleichrichter, versorgt, der aus einer Sekundärwicklung gespeist wird, die induktiv gekoppelt ist an eine stationär angeordnete Primärwicklung. Von Vorteil ist dabei, dass eine einfache elektronische Schaltung ausreichend ist und ein Bedämpfen der mechanischen Schwingungen durch ein höheres Trägheitsmoment erreichbar ist.

Bei einer vorteilhaften Ausgestaltung wird von einer elektronischen Schaltung, das auf die Statorwicklung gekoppelte Zusatzsignal erkannt und daraus die Winkellage des Rotors bestimmt. Von Vorteil ist dabei, dass der elektronischen Schaltung das Statorstrommesssignal zuführbar ist und somit das auf die Statorwicklung gekoppelte Zusatzsignal separierbar ist. Insbesondere ist die elektronische Schaltung derart ausführbar, dass sie eine spezielle Eigenschaft des Zusatzsignals, beispielsweise Frequenz und/oder Flankenanstiegsgeschwindigkeit, besonders gut erkennt, insbesondere herausfiltert. Hierdurch ist eine besonders gute, also sichere fehlerfreie Bestimmung der Winkellage des Rotors ermöglicht.

Bei einer vorteilhaften Ausgestaltung wird von der elektronischen Schaltung ein jeweils aktueller Statorstromraumzeiger bestimmt und ein Statorspannungsraumzeiger derart gestellt, dass der bestimmte Statorstromraumzeiger auf einen ihm zugeordneten Sollwert hin geregelt wird. Von Vorteil ist dabei, dass kein wesentlicher Zusatzaufwand für die Erkennung des auf die Statorwicklung gekoppelten Zusatzsignals notwendig ist. Außerdem ist bei einer Synchronmaschine ein Drehfeld in einfacher Weise erzeugbar, so dass die Raumzeiger drehende Vektoren sind. Hingegen ist das Zusatzsignal derart ausführbar, dass es einem pulsierenden Raumzeiger entspricht und ist somit leicht unterscheidbar und erkennbar.

Bei einer vorteilhaften Ausgestaltung ist die Regelung eine feldorientierte Regelung, wobei diese ein Flussmodell umfasst, das gestützt wird auf das separierte Zusatzsignal, insbesondere auf das aus dem separierten Zusatzsignal bestimmte Signal für die Winkellage des Rotors. Von Vorteil ist dabei, dass kein zusätzlicher Winkelsensor zur Erfassung der Winkellage des Rotors notwendig ist und eine hohe Dynamik des Drehzahlregelkreises der feldorientierten Regelung erreichbar ist, insbesondere indem ein Flussmodell stets berücksichtigt wird, also regelmäßig der Fluss bestimmt wird. Dabei werden die physikalischen Größen in einem Koordinatensystem dargestellt, dessen Abszisse in Richtung des bestimmten Flusses und dessen Ordinate senkrecht hierzu ist. Somit ist eine feldorientierte Regelung ausführbar.

Bei einer vorteilhaften Ausgestaltung ist das Zusatzsignal synchron zu demjenigen Stromanteil, welcher von der Einspeiseeinheit der Primärwicklung zugeführt wird zur Versorgung der Erregerwicklung. Von Vorteil ist dabei, dass eine weiter verbesserte Erkennbarkeit erreichbar ist.

Wichtige Merkmale bei der Vorrichtung sind, dass die Erregerfeldwicklung über einen induktiven Übertrager versorgt ist, dessen Primärwicklung mit einer Einspeiseeinheit verbunden ist und dessen Sekundärwicklung einen Gleichrichter versorgt, der die Erregerwicklung speist. **Dabei ist die Frequenz des Zusatzsignals ein ganzzahliges Vielfaches von der Frequenz desjenigen Stromanteils, welcher von der Einspeiseeinheit der Primärwicklung zugeführt wird zur Versorgung der Erregerwicklung.**

Von Vorteil ist dabei, dass eine berührungslose Versorgung der Erregerfeldwicklung ausführbar ist. Außerdem ist eine elektronische Schaltung auf dem Rotor vorzusehen, die somit auch weitere Funktionalitäten ausführbar macht. **Von Vorteil ist dabei, dass die Stromabtastung derart synchronisiert ausführbar ist, dass durch gleitende Mittelwertbildung vom Zusatzsignal verursachte Schwankungen herausfilterbar sind.**

Bei einer vorteilhaften Ausgestaltung wird das Zusatzsignal von der mit der Primärwicklung verbundenen Einspeiseeinheit erzeugt, insbesondere also die Einspeiseeinheit entsprechende Mittel zur Erzeugung des Zusatzsignals umfasst. Von Vorteil ist dabei, dass das auf die Statorwicklung gekoppelte Zusatzsignal in einfacher Weise synchronisiert mit weiteren Signalen ausführbar ist. Insbesondere ist ein Teil des Zusatzsignals an Vergleichsmittel zuführbar, die das Erkennen des Zusatzsignals ausführen. Somit ist eine noch bessere und fehlerärmere Erkennung erreichbar.

Bei einer alternativen vorteilhaften Ausgestaltung wird das Zusatzsignal von einer aus dem Gleichrichter versorgten elektronischen Schaltung erzeugt, insbesondere also die Einspeiseeinheit entsprechende Mittel zur Erzeugung des Zusatzsignals umfasst. Von Vorteil ist dabei, dass eine verlustarme Erzeugung des Zusatzsignals erreichbar ist, da keine Übertragung des Zusatzsignals über die induktive Kopplung zwischen Primärwicklung und Sekundärwicklung auszuführen ist.

Bei einer vorteilhaften Ausgestaltung wird die Statorwicklung der Synchronmaschine von einer Wechselrichterendstufe gespeist, wobei den elektronischen Schaltern der Wechselrichterendstufe pulsweitenmodulierte Ansteuersignale aus einer elektronischen Schaltung zugeführt werden, die Mittel zur Erfassung des Motorstroms aufweist und ein Mittel zur Erkennung des auf die Statorwicklung gekoppelten Zusatzsignals. Von Vorteil ist dabei, dass eine Regelung der Elektromaschine durch eine Regelungseinheit ermöglicht ist, die gemäß einer feldorientierten Regelung arbeitet und den Statorspannungsraumzeiger derart stellt, dass der erfasste Statorstromraumzeiger auf seinen Sollwert hin geregelt wird.

Bei einer vorteilhaften Ausgestaltung ist das Mittel zur Erkennung des auf die Statorwicklung gekoppelten Zusatzsignals mit einem Mittel zur Bestimmung der Winkellage des Rotors verbunden. Von Vorteil ist dabei, dass aus dem auf die Statorwicklung gekoppelten Zusatzsignal die Winkellage des Rotors bestimmbar ist, insbesondere direkt.

Bei einer vorteilhaften Ausgestaltung sind Mittel zum Datenaustausch zwischen der Einspeiseeinheit und der auf dem Rotor vorgesehenen elektronischen Schaltung vorgesehen. Von Vorteil ist dabei, dass ein synchroner Betrieb ausführbar ist und/oder eine Änderung der Frequenz des Zusatzsignals anpassbar ist an die Betriebsparameter, wie beispielsweise Drehzahl oder Drehmoment der Maschine.

Weitere Vorteile ergeben sich aus den Unteransprüchen.

Die Erfindung wird nun näher erläutert:

Die Elektromaschine ist als fremderregte Synchronmaschine ausgeführt. Hierbei ist auf dem Rotor der Elektromaschine eine Erregerwicklung vorgesehen, die mindestens eine Feldspulenwicklung umfasst. Vorzugsweise weist der Rotor ein Rotorblechpaket auf, an welchem Schenkel ausgebildet sind, um die herum eine jeweilige Feldspulenwicklung angeordnet ist.

Die Feldspulenwicklungen werden mit unipolarem Strom, insbesondere Gleichstrom, der aus einer auf dem Rotor angeordneten Gleichrichteranordnung erzeugt wird, gespeist. Dabei ist der Gleichrichter aus einer ebenfalls auf dem Rotor angeordneten Sekundärwicklung versorgt, die induktiv an eine mit dem Maschinengehäuse verbundenen Primärwicklung gekoppelt ist. Somit ist eine berührungslose Versorgung der Sekundärwicklung ermöglicht. Bevorzugt ist die Sekundärwicklung axial außerhalb des Rotorblechpakets angeordnet.

Die Statorwicklung der Elektromaschine ist vorzugsweise als mehrphasige Drehstromwicklung ausgeführt, insbesondere als dreiphasige Drehstromwicklung, und wird von einem Wechselrichter gespeist, der aus einer unipolaren Spannung gespeist wird. Diese wird beispielsweise durch eine Batteriespannung oder eine gleichgerichtete Netzspannung erzeugt. Die Ansteuersignale für die Schalter des Wechselrichters werden von einer Signalelektronik erzeugt, die eine Regelungseinheit umfassen, der Strommesswerte zur Bestimmung des Statorstromraumzeigers zugeführt werden. Dabei stellt die Regelungseinheit den Statorspannungsraumzeiger so, dass der Statorstromraumzeiger auf einen Sollwert hin geregelt wird.

Innerhalb der Steuerelektronik bestimmt ein Rechner hierzu einen Flussraumzeiger gemäß einem Flussmodell und bestimmt physikalische Größen in einem hierzu ausgerichteten Koordinatensystem. Auf diese Weise ist somit auch eine feldorientierte Regelung der Elektromaschine vom Rechner durchführbar.

Die Erregerwicklung wird im Normalbetrieb mit einem Gleichstrom beaufschlagt oder zumindest mit einem unipolaren Strom, so dass die Erregerwicklung ähnlich wie eine Dauermagnetanordnung wirkt.

Erfindungsgemäß wird in die Erregerwicklung ein Zusatzsignal dem vorzugsweise als Gleichstrom ausgeführten, unipolaren Strom überlagert, wobei das Zusatzsignal eine vorgegebene Frequenz aufweist, also einen periodischen Verlauf aufweist.

Vorzugsweise ist das Zusatzsignal sinusförmig. Aber auch dreieckförmig oder rechteckförmige Signalverläufe sind vorteilhaft verwendbar.

Dabei wird das Zusatzsignal bei einem ersten erfindungsgemäßen Ausführungsbeispiel primärseitig eingespeist und somit induktiv an die Sekundärspule übertragen. Von dort wird es weitergeführt über den Gleichrichter an die Erregerwicklung.

Bei einem anderen erfindungsgemäßen Ausführungsbeispiel wird das Zusatzsignal auf dem Rotor von einer elektronischen Schaltung erzeugt, die über den Gleichrichter aus der Sekundärspule gespeist ist und vorzugsweise auch Mittel einer Datenaustauschverbindung umfasst, wodurch Daten austauschbar sind mit einer primärseitig angeordneten, die Primärwicklung speisenden elektronischen Anordnung. Somit ist es sogar ermöglicht, dass das Zusatzsignal synchron zum Primärstrom der Primärwicklung gebildet wird.

Bei einem anderen erfindungsgemäßen Ausführungsbeispiel weist das Zusatzsignal einen Wechselspannungsanteil aufweist, dessen Frequenz einem in die Primärwicklung eingespeisten Wechselspannungsanteil entspricht. Vorzugsweise wird also dem von der Sekundärwicklung gespeisten Gleichrichter kein besonderes Glättungsmittel, wie Glättungskondensator , nachgeschaltet. Somit ist diejenige Primärwechselspannung ohne zusätzlichen Aufwand zur Energieversorgung und darüber hinaus auch als Zusatzsignal verwendbar.

Die die Regelungseinheit umfassende elektronische Schaltung weist auch Mittel zum Erkennen des auf die Statorwicklung gekoppelten Zusatzsignals auf, die mit Mitteln zur Bestimmung der Winkellage des Rotors, insbesondere mit Mitteln zur Bestimmung einer Information über die Winkellage des Rotors, verbunden sind. Dabei ist eine klare Erkennung des auf die Statorwicklung gekoppelten Zusatzsignals wichtig. Denn nur dann ist auch eine sichere Bestimmung der Winkellage ausführbar.

Die Erfindung umfasst auch Ausführungsbeispiele, bei denen Rotor und Stator vertauscht vorgesehen sind, also am Stator die Erregerwicklung vorgesehen ist und am Rotor die Drehstromwicklung, welche berührungslos versorgbar ist. Das Zusatzsignal muss in diesem Fall nicht an ein drehendes Teil übertragen werden sondern ist von einer stationär angeordneten Schaltung einspeisbar in die Erregerwicklung.

## Patentansprüche

1. Verfahren zur Regelung einer mittels einer Erregerwicklung fremderregten Synchronmaschine,
**wobei** die Erregerwicklung mit einem unipolaren Strom beaufschlagt wird, dem ein Zusatzsignal überlagert wird,
**dadurch gekennzeichnet, dass**
**die Frequenz des Zusatzsignals ein ganzzahliges Vielfaches ist von der Frequenz desjenigen Stromanteils, welcher von einer Einspeiseeinheit einer stationär angeordneten Primärwicklung zur Versorgung der Erregerwicklung zugeführt wird, an welche eine Sekundärwicklung induktiv gekoppelt ist, aus der die Erregerwicklung versorgt wird.**

2. Verfahren nach mindestens einem der vorangegangenen Ansprüche,
**dadurch gekennzeichnet, dass**
das Zusatzsignal zumindest einen Wechselspannungsanteil aufweist, insbesondere dessen Frequenz höher ist, insbesondere mehr als etwa zweimal höher, als die elektrische Statorfrequenz bei maximal erlaubter Drehzahl des Rotors der Synchronmaschine.

3. Verfahren nach mindestens einem der vorangegangenen Ansprüche,
**dadurch gekennzeichnet, dass**
die Synchronmaschine von einem Wechselrichter gespeist wird, dessen Schalter moduliert angesteuert werden, insbesondere pulsweitenmoduliert,
wobei die Frequenz des Zusatzsignals mit der Modulationsfrequenz synchronisiert wird.

4. Verfahren nach mindestens einem der vorangegangenen Ansprüche,
**dadurch gekennzeichnet, dass**
das Zusatzsignal berührungslos übertragen wird an eine elektronische Schaltung, die auf dem Rotor vorgesehen ist und die Erregerwicklung speist.

5. Verfahren nach Anspruch 1 oder 2,
**dadurch gekennzeichnet, dass**
das Zusatzsignal von einer elektronischen Schaltung erzeugt wird, die aus einem Gleichrichter, insbesondere aus einem auf dem Rotor angeordneten Gleichrichter, versorgt wird, der aus einer Sekundärwicklung gespeist wird, die induktiv gekoppelt ist an eine stationär angeordnete Primärwicklung, insbesondere die stationär angeordnet ist.

6. Verfahren nach mindestens einem der vorangegangenen Ansprüche,
**dadurch gekennzeichnet, dass**
von einer elektronischen Schaltung, das auf die Statorwicklung gekoppelte Zusatzsignal erkannt wird und daraus die Winkellage des Rotors bestimmt wird.

7. Verfahren nach mindestens einem der vorangegangenen Ansprüche,
**dadurch gekennzeichnet, dass**
von der elektronischen Schaltung mittels des Wechselrichters ein Statorspannungsraumzeiger derart gestellt wird, dass erfasste Statorstromraumzeiger auf seinen Sollwert hin geregelt wird.

8. Verfahren nach mindestens einem der vorangegangenen Ansprüche,
**dadurch gekennzeichnet, dass**
die Regelung eine feldorientierte Regelung ist, wobei diese ein Flussmodell umfasst, das gestützt wird auf das auf die Statorwicklung gekoppelte Zusatzsignal, insbesondere auf das aus dem auf die Statorwicklung gekoppelten Zusatzsignal bestimmte Signal für die Winkellage des Rotors, insbesondere wobei physikalische Größen in einem orthogonalen Koordinatensystem dargestellt werden, dessen eine Achse in Richtung des bestimmten Flusses ausgerichtet ist.

9. Verfahren nach mindestens einem der vorangegangenen Ansprüche,
**dadurch gekennzeichnet, dass**
das Zusatzsignal synchron ist zu demjenigen Stromanteil, welcher von der Einspeiseeinheit der Primärwicklung zugeführt wird zur Versorgung der Erregerwicklung.

10. **Vorrichtung zur Regelung einer mittels einer Erregerwicklung fremderregten Synchronmaschine,**
**dadurch gekennzeichnet, dass**
die Erregerfeldwicklung über einen induktiven Übertrager versorgt ist, dessen Primärwicklung mit einer Einspeiseeinheit verbunden ist und dessen Sekundärwicklung einen Gleichrichter versorgt, der die Erregerwicklung speist,
so dass die Erregerwicklung mit einem unipolaren Strom beaufschlagt wird, dem ein Zusatzsignal überlagert ist,
**wobei die Frequenz des Zusatzsignals ein ganzzahliges Vielfaches ist von der Frequenz desjenigen Stromanteils, welcher von der Einspeiseeinheit der Primärwicklung zur Versorgung der Erregerwicklung zugeführt ist.**

11. Vorrichtung nach Anspruch 10,
**dadurch gekennzeichnet, dass**
das Zusatzsignal von der mit der Primärwicklung verbundenen Einspeiseeinheit erzeugt wird, insbesondere also die Einspeiseeinheit entsprechende Mittel zur Erzeugung des Zusatzsignals umfasst.

12. Vorrichtung nach einem der Ansprüche 10 bis 11,
**dadurch gekennzeichnet, dass**
das Zusatzsignal von einer aus dem Gleichrichter versorgten elektronischen Schaltung erzeugt wird, insbesondere also die Einspeiseeinheit entsprechende Mittel zur Erzeugung des Zusatzsignals umfasst.

13. Vorrichtung nach einem der Ansprüche 10 bis 12,
**dadurch gekennzeichnet, dass**
die Statorwicklung der Synchronmaschine von einer Wechselrichterendstufe gespeist wird, wobei den elektronischen Schaltern der Wechselrichterendstufe pulsweitenmodulierte Ansteuersignale aus einer elektronischen Schaltung zugeführt werden, die Mittel zur Erfassung des Motorstroms aufweist und ein Mittel zur Erkennung des auf die Statorwicklung gekoppelten Zusatzsignals.

14. Vorrichtung nach einem der Ansprüche 10 bis 13,
**dadurch gekennzeichnet, dass**
das Mittel zur Erkennung des auf die Statorwicklung gekoppelten Zusatzsignals mit einem Mittel zur Bestimmung der Winkellage des Rotors verbunden ist.

15. Vorrichtung nach einem der Ansprüche 10 bis 14,
**dadurch gekennzeichnet, dass**
Mittel zum Datenaustausch zwischen der Einspeiseeinheit und der auf dem Rotor vorgesehenen elektronischen Schaltung vorgesehen sind.

## Claims

1. Method for regulating a synchronous machine separately excited by means of an exciter winding,
wherein the exciter winding is supplied with a unipolar current, on which an additional signal is superimposed,
**characterised in that**
the frequency of the additional signal is an integral multiple of the frequency of that current component which is supplied by a feed-in unit to a stationarily arranged primary winding for supplying the exciter winding, to which there is inductively coupled a secondary winding, from which the exciter winding is supplied.

2. Method according to at least one of the preceding claims,
**characterised in that**
the additional signal has at least one alternating voltage component, in particular of which the frequency is higher, in particular more than about two times higher, than the electrical stator frequency at maximum allowed speed of the rotor of the synchronous machine.

3. Method according to at least one of the preceding claims,
**characterised in that**
the synchronous machine is fed by an inverter, of which the switch is driven in a modulated manner, in particular pulse-width-modulated manner,
wherein the frequency of the additional signal is synchronised with the modulation frequency.

4. Method according to at least one of the preceding claims,
**characterised in that**
the additional signal is transmitted contactlessly to an electronic circuit, which is provided on the rotor and feeds the exciter winding.

5. Method according to Claim 1 or 2,
**characterised in that**
the additional signal is generated by an electronic circuit, which circuit is supplied from a rectifier, in particular from a rectifier arranged on the rotor, which rectifier is fed from a secondary winding which is inductively coupled to a stationarily arranged primary winding, in particular which is stationarily arranged.

6. Method according to at least one of the preceding claims,
**characterised in that**
the additional signal coupled onto the stator winding is detected by an electronic circuit, and the angular position of the rotor is determined therefrom.

7. Method according to at least one of the preceding claims,
**characterised in that**
a stator voltage space vector is adjusted by the electronic circuit by means of the inverter in such a manner that the sensed stator current space vector is regulated towards its setpoint value.

8. Method according to at least one of the preceding claims,
**characterised in that**
the regulation is a field-oriented regulation, this comprising a flux model which is based on the additional signal coupled onto the stator winding, in particular on the signal, determined from the additional signal coupled onto the stator winding, for the angular position of the rotor, in particular where physical quantities are represented in an orthogonal coordinate system, one axis of which is oriented in the direction of the determined flux.

9. Method according to at least one of the preceding claims,
**characterised in that**
the additional signal is synchronous with that current component which is supplied by the feed-in unit to the primary winding for supplying the exciter winding.

10. Device for regulating a synchronous machine separately excited by means of an exciter winding, **characterised in that**
the exciter winding is supplied via an inductive transformer, the primary winding of which is connected to a feed-in unit and the secondary winding of which supplies a rectifier which feeds the exciter winding,
so that the exciter winding is supplied with a unipolar current, on which an additional signal is superimposed, wherein the frequency of the additional signal is an integral multiple of the frequency of that current component which is supplied by the feed-in unit to the primary winding for supplying the exciter winding.

11. Device according to Claim 10,
**characterised in that**
the additional signal is generated by the feed-in unit connected to the primary winding, in particular therefore the feed-in unit comprises corresponding means for generating the additional signal.

12. Device according to one of Claims 10 to 11, **characterised in that**
the additional signal is generated by an electronic circuit supplied from the rectifier, in particular therefore the feed-in unit comprises corresponding means for generating the additional signal.

13. Device according to one of Claims 10 to 12, **characterised in that**
the stator winding of the synchronous machine is fed by an inverter output stage, pulse-width-modulated drive signals being supplied to the electronic switches of the inverter output state from an electronic circuit which has means for sensing the motor current and a means for detecting the additional signal coupled onto the stator winding.

14. Device according to one of Claims 10 to 13, **characterised in that**
the means for detecting the additional signal coupled onto the stator winding is connected to a means for determining the angular position of the rotor.

15. Device according to one of Claims 10 to 14, **characterised in that**
means for data exchange between the feed-in unit and the electronic circuit provided on the rotor are provided.

## Revendications

1. Procédé de régulation d'une machine synchrone à excitation séparée au moyen d'un enroulement d'excitation,
dans lequel l'enroulement d'excitation est soumis à un courant unipolaire auquel un signal supplémentaire est superposé,
**caractérisé en ce que**
la fréquence du signal supplémentaire est un multiple entier de la fréquence de la composante de courant qui est amenée par une unité d'alimentation à un enroulement primaire disposé de manière stationnaire pour alimenter l'enroulement d'excitation, auquel est couplé par induction un enroulement secondaire à partir duquel l'enroulement d'excitation est alimenté.

2. Procédé selon au moins une des revendications précédentes,
**caractérisé en ce que**
le signal supplémentaire présente au moins une composante de tension alternative, en particulier dont la fréquence est plus élevée, en particulier plus d'environ deux fois plus élevée, que la fréquence électrique statorique à la vitesse de rotation maximale autorisée du rotor de la machine synchrone.

3. Procédé selon au moins une des revendications précédentes,
**caractérisé en ce que**
la machine synchrone est alimentée par un onduleur dont les commutateurs sont commandés de manière modulée, en particulier par modulation de largeur d'impulsion, la fréquence du signal supplémentaire étant synchronisée avec la fréquence de modulation.

4. Procédé selon au moins une des revendications précédentes,
**caractérisé en ce que**
le signal supplémentaire est transmis sans contact à un circuit électronique qui est prévu sur le rotor et qui alimente l'enroulement d'excitation.

5. Procédé selon la revendication 1 ou 2,
**caractérisé en ce que**
le signal supplémentaire est généré par un circuit électronique qui est alimenté à partir d'un redresseur, en particulier d'un redresseur disposé sur le rotor, qui est alimenté à partir d'un enroulement secondaire qui est couplé par induction à un enroulement primaire disposé de manière stationnaire, en particulier qui est disposé de manière stationnaire.

6. Procédé selon au moins une des revendications précédentes,
**caractérisé en ce que**
le signal supplémentaire couplé sur l'enroulement statorique est détecté par un circuit électronique et la position angulaire du rotor déterminée à partir de celui-ci.

7. Procédé selon au moins une des revendications précédentes,
**caractérisé en ce que**
un vecteur spatial de tension statorique est réglé par le circuit électronique au moyen de l'onduleur de façon que le vecteur spatial de courant statorique détecté soit régulé à sa valeur nominale.

8. Procédé selon au moins une des revendications précédentes,
**caractérisé en ce que**
la régulation est une régulation orientée champ, celle-ci comprenant un modèle de flux qui est fondé sur le signal supplémentaire couplé sur l'enroulement statorique, en particulier sur le signal de position angulaire du rotor déterminé à partir du signal supplémentaire couplé sur l'enroulement statorique, des grandeurs physiques étant en particulier représentées dans un système de coordonnées orthogonal dont un axe est orienté dans la direction du flux déterminé.

9. Procédé selon au moins une des revendications précédentes,
**caractérisé en ce que**
le signal supplémentaire est synchrone à la composante de courant qui est amenée par l'unité d'alimentation à l'enroulement primaire pour alimenter l'enroulement d'excitation.

10. Dispositif de régulation d'une machine synchrone à excitation séparée au moyen d'un enroulement d'excitation,
**caractérisé en ce que**
l'enroulement de champ d'excitation est alimenté par un translateur inductif dont l'enroulement primaire est relié à une unité d'alimentation et dont l'enroulement secondaire alimente un redresseur qui alimente l'enroulement d'excitation,
de sorte que l'enroulement d'excitation est soumis à un courant unipolaire auquel un signal supplémentaire est superposé,
la fréquence du signal supplémentaire étant un multiple entier de la fréquence de la composante de courant qui est amenée par l'unité d'alimentation à l'enroulement primaire pour alimenter l'enroulement d'excitation.

11. Dispositif selon la revendication 10,
**caractérisé en ce que**
le signal supplémentaire est généré par l'unité d'alimentation reliée à l'enroulement primaire, en particulier, par conséquent, l'unité d'alimentation comprend des moyens correspondants pour générer le signal supplémentaire.

12. Dispositif selon une des revendications 10 à 11,
**caractérisé en ce que**
le signal supplémentaire est généré par un circuit électronique alimenté par le redresseur, en particulier, par conséquent, l'unité d'alimentation comprend des moyens correspondants pour générer le signal supplémentaire.

13. Dispositif selon une des revendications 10 à 12,
**caractérisé en ce que**
l'enroulement statorique de la machine synchrone est alimenté par un étage final d'onduleur, des signaux de commande modulés en largeur d'impulsion provenant d'un circuit électronique étant amenés aux commutateurs électroniques de l'étage final d'onduleur, lequel circuit électronique présente des moyens de détection du courant de moteur et un moyen de détection du signal supplémentaire couplé sur l'enroulement statorique.

14. Dispositif selon une des revendications 10 à 13,
**caractérisé en ce que**
le moyen de détection du signal supplémentaire couplé sur l'enroulement statorique est relié à un moyen de détermination de la position angulaire du rotor.

15. Dispositif selon une des revendications 10 à 14,
**caractérisé en ce que**
des moyens permettant l'échange de données entre l'unité d'alimentation et le circuit électronique prévu sur le rotor sont prévus.
